# EUROPÄISCHE PATENTANMELDUNG

(11) **EP 1 067 283 A2**
(43) Veröffentlichungstag der Anmeldung: **10.01.2001**
(21) Anmeldenummer: 00114368.4
(22) Anmeldetag: 05.07.2000
(51) Int. Cl.: F02D 41/38, F02D 41/40

(54) **Verfahren zur Steuerung des Einspritzvorgangs an einer Kraftmaschine**

(30) Priorität: 07.07.1999 US 348853
(71) Anmelder: DEERE & COMPANY, Moline, Illinois 61265-8098 (US)
(72) Erfinder: Sun, Ruonan, Cedar Falls, IA 50613 (US); Pipho, Michael John, Waterloo, IA 50703 (US); Streicher, Ernest Allen, Cedar Falls, IA 50613 (US); Yost, Jason Edward, Cedar Falls, IA 50613 (US)
(74) Vertreter: Magin, Ludwig Bernhard

(57) **Zusammenfassung**

Bei Diesel-Einspritzantrieben besteht ein Bedarf nach einer genauen Messung der Einstellung eines Kraftstoffeinspritzimpulses als Rückmeldung an das Kraftstoffeinspritzsteuerungssystem, so daß dieses die Kraftstoffeinspritzeinstellung regulieren kann. Die gewünschte Einstellung der Kraftstoffeinspritzung kann zumindest teilweise als eine Funktion der Antriebslast (welche durch die Kraftstoffmenge wiedergegeben werden kann) oder des Kraftstoffdurchsatzes bestimmt werden. Die Menge und Einstellung der Kraftstoffeinspritzimpulse kann durch ein Kraftstoffdrucksignal, das durch einen Drucksensor geliefert wird, der mit einer Kraftstoffeinspritzleitung verbunden ist, bestimmt werden.

Es wird ein Verfahren zur Steuerung des Einspritzvorgangs an einer Kraftmaschine (10) mittels eines Steuerungssystems vorgeschlagen, wobei eine Geschwindigkeit der Kraftmaschine (10) ermittelt und in ein Antriebsgeschwindigkeitssignal umgesetzt wird, und mittels eines Kraftstoffdrucksensors (34) ein Kraftstoffdrucksignal erzeugt wird.

Verfahren zur Steuerung des Einspritzvorgangs an einer Kraftmaschine finden im Antriebsbau Verwendung.

## Beschreibung

Die Erfindung betrifft ein Verfahren zur Steuerung des Einspritzvorgangs an einer Kraftmaschine, insbesondere an einem Dieselantrieb, mittels eines Steuerungssystems, wobei eine Geschwindigkeit der Kraftmaschine ermittelt und in ein Antriebsgeschwindigkeitssignal umgesetzt wird, und mittels eines Kraftstoffdrucksensors ein Kraftstoffdrucksignal erzeugt wird.

Bei elektronisch gesteuerten Einspritz-Dieselmotoren besteht ein Bedarf nach einer genauen Messung der Einstellung eines Kraftstoffeinspritzimpulses als Rückmeldung an das Kraftstoffeinspritzsteuerungssystem, so daß dieses die Kraftstoffeinspritzeinstellung regulieren kann. Die gewünschte Einstellung der Kraftstoffeinspritzung kann zumindest teilweise als eine Funktion der Antriebslast (welche durch die Kraftstoffmenge wiedergegeben werden kann) oder des Kraftstoffdurchsatzes bestimmt werden. Die Menge und Einstellung der Kraftstoffeinspritzimpulse kann durch ein Kraftstoffdrucksignal, das durch einen Drucksensor geliefert wird, der mit einer Kraftstoffeinspritzleitung verbunden ist, bestimmt werden.

Es ist beispielsweise bekannt, die Kraftstoffmenge eines Kraftstoffeinspritzimpulses anhand der Ausbildung eines Kraftstoffdrucksignals zu bestimmen. Beispielsweise zeigt die US-A-4,426,981 ein System, welches die Kaftstoffeinspritzmenge anhand des Integrals eines Drucksignals eines Drucksensors bestimmt, der mit einer Kraftstoffpumpe verbunden ist.

Es ist darüber hinaus bekannt, die Einstellung durch ein Kraftstoffdrucksignal zu bestimmen. Die US-A-4,426,981 bestimmt den Beginn des Kraftstoffeinspritzimpulses durch einen Vergleich eines differenzierten Drucksignals mit einem Grenzwert.

Die US-A-5,107,700 zeigt ein System, welches den Beginn der Kraftstoffeinspritzung durch einen Vergleich eines Kraftstoffdrucksignals mit einem Schwellenwert ermittelt, welcher von einem Spitzenwert des Kraftstoffdrucksignals des vorhergehenden Einspritzzyklus abgeleitet ist.

Die der Erfindung zugrunde liegende Aufgabe wird darin gesehen, eine andere Art der Einstellungsbestimmung für elektronische Steuerungssysteme für Antriebe bzw. Kraftmaschinen zur Verfügung zu stellen.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Verfahren zur Einstellung einer Kraftmaschine mit einer Quelle unter Druck stehenden Kraftstoffs und einer Kraftstoffleitung zum Liefern von Kraftstoff an eine Verbrennungskammer der Kraftmaschine zur Verfügung gestellt. Das Steuerungssystem weist vorzugsweise einen Kraftstoffdrucksensor zur Aufnahme eines Kraftstoffdrucks und zur Bestimmung der Einstellung der Kraftstoffmenge auf, die durch das Verfahren mit den folgenden Schritten in die Verbrennungskammer eingebracht wird. Es wird die Antriebsgeschwindigkeit ermittelt. Die eingespritzte Kraftstoffmenge wird gemessen und aus dieser wird ein Antriebsbelastungssignal abgeleitet. Ein variables Schwellensignal wird als eine Funktion des Antriebsgeschwindigkeitssignals und des Antriebsbelastungssignals erzeugt. Das Kraftstoffdrucksignal wird mit dem variablen Schwellensignal verglichen und es wird ein Steuersignal erzeugt, wenn sich das Kraftstoffdrucksignal mit dem variablen Schwellensignal überschneidet, während die Stärke des Kraftstoffsignals zunimmt.

In der Zeichnung ist ein nachfolgend näher beschriebenes Ausführungsbeispiel der Erfindung dargestellt. Es zeigt:
- Fig. 1: eine vereinfachte, schematische Darstellung eines Kraftstoffeinspritzsteuerungssystems für einen Dieselantrieb bzw. eine Kraftmaschine,
- Fig. 2: eine Darstellung eines Steuerkreises aus Fig. 1,
- Fig. 3: eine Darstellung eines Drucksignalkreises aus Fig. 1 und
- Fig. 4: ein logisches Flußdiagram eines Algorithmus, der durch einen Mikroprozessor des Kraftstoffeinspritzsteuerungssystems aus Fig. 1 ausgeführt wird.

Diese Anmeldung beinhaltet einen Anhang von 20 Blättern, auf denen ein Computerprogramm wiedergegeben ist.

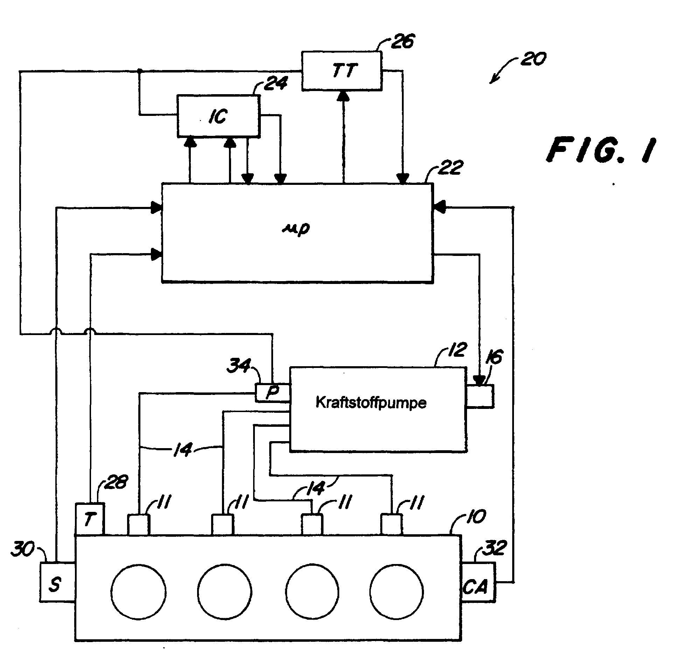

Es wird nun auf Fig. 1 Bezug genommen, in der ein Diesel-Antrieb bzw. eine Verbrennungs- oder Kraftmaschine 10 mit einem Kraftstoffeinspritzventil 11 gezeigt wird, welche durch eine Kraftstoffpumpe 12 über Kraftstoffleitungen 14 versorgt wird. Die Kraftstoffpumpe 12 ist vorzugsweise eine Kraftstoffeinspritzpumpe vom Rotationstyp mit einer Schrittmotoreinstellung 16. Eine Steuerungsschaltung 20 weist einen Mikroprozessor 22, einen Integrationskreis 24 und einen Steuerkreis 26 auf, und stellt ein Einstellungssteuerungssignal an die Schrittmotoreinstellung 16 als eine Funktion des aufgenommenen Eingangssignals zur Verfügung, das ein Temperatursignal eines Temperatursensors 28, ein Antriebsgeschwindigkeitssignal eines Antriebsgeschwindigkeitssensors 30, ein Kurbeiwellenwinkelsignal eines Kurbelwellenstellungssensors 32 und ein Drucksignal eines Kraftstoffdrucksensors 34 beinhaltet.

Der Kraftstoffdrucksensor 34 ist vorzugsweise ein piezoelektrischer Drucksensor, wie er von Texas Instruments erhältlich ist (wobei viele andere Sensortechnologien ebenso eingesetzt werden könnten) und ist an einer Kraftstoffleitung 14 zwischen der Kraftstoffpumpe 12 und der korrespondierenden Kraftstoffeinspritzventil 11 oder in dem Zündverstellkolben (nicht gezeigt) der Kraftstoffpumpe 12 vorgesehen. Der Kraftstoffdrucksensor 34 erzeigt vorzugsweise eine Spannung, die zu der Belastung eines Sensorelements proportional ist. Wenn das Sensorelement eine Ladung erzeugt, die zu dem Druck in der Kraftstoffleitung 14 proportional ist, kann die Ladung in eine Spannung umgewandelt werden.

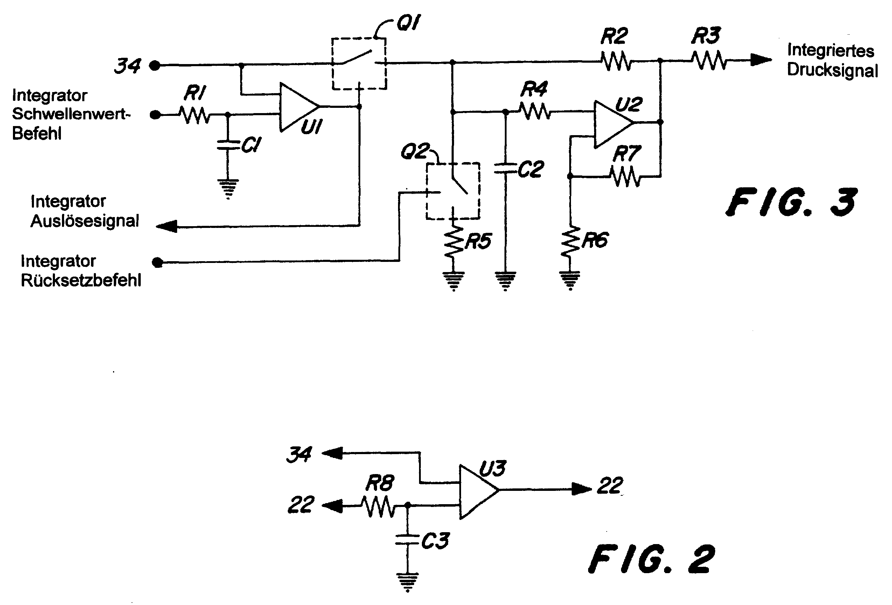

Wie es am besten aus Fig. 2 ersichtlich wird, weist der Steuerkreis 26 einen Vergleicher 133 (LM2901) auf, wobei ein Eingang derart verbunden ist, daß er das Drucksignal von dem Kraftstoffdrucksensor 34 aufnimmt, und ein zweiter Eingang derart verbunden ist, daß er ein Auslöseimpuls-Schwellensignal von dem Mikroprozessor 22 erhält. Vorzugsweise ist das Signal von dem Mikroprozessor 22 ein impulsweitenmoduliertes Quadratwellensignal, welches einen Arbeitszyklus aufweist, der zu dem Auslöse-Schwellenwert proportional ist, welches durch einen Widerstand-/Kapizitätsfilter, der einen Widerstand R8 (40kΩ) und einen Kondensator C3 (0,1µF) in eine proportionale Gleichstromspannung umgewandelt wird. Der Ausgang des Vergleichers U3 ist mit einem Intregrationsauslösersignaleingang des Mikroprozessors 22 verbunden.

Der Integrationskreis 24 weist die folgenden Bauteile auf, die wie in Fig. 3 dargestellt verbunden sind: Widerstand R1 (40 kΩ), Widerstände R2, R6 und R7 (100 KΩ), Widerstand R3 (10 kΩ), Widerstand R4 (50 KΩ), Widerstand R5 (1 kΩ), Kondensator C1 (o,1 µF), Kondensator C2 (0,02 µF), Transistor Q1 und Q2 (2N7002), Vergleicher U1 und U2 (LM2901). Folglich ist der Integrationskreis 24 ein auf Standardbauteilen basierender Integrator mit einer Rücksetz- und Eingrenzungs (Windowing)-Logik. Die Auslöse-Schwellenwerte, die die Integration auslösen und beenden, werden durch die Messung von Hintergrundsignalpegeln bestimmt und durch den Mikroprozessor 22 erzeugt. Die Eingrenzung der Integration wird durch den Mikroprozessor 22 als eine Funktion des Kurbeiwellenwinkelsignals des Kurbelwellenstellungssensors 32 gesteuert, und erlaubt eine bessere Störungsunterdrückung in dem System. Die Auslösewerte am Anfang und am Ende der Integration werden von dem Mikroprozessor 22 verwendet, um die integrierten Werte für die Hintergrundwerte zu korrigieren und den Beginn der Einspritzung zu bestimmen. Mit Bezug auf die Figuren 2 und 3 sind die Werte für die dort gezeigten Bauteile nur exemplarisch zu verstehen und andere Bauteile könnten verwendet werden, ohne von dem Umfang der vorliegenden Erfindung abzuweichen.

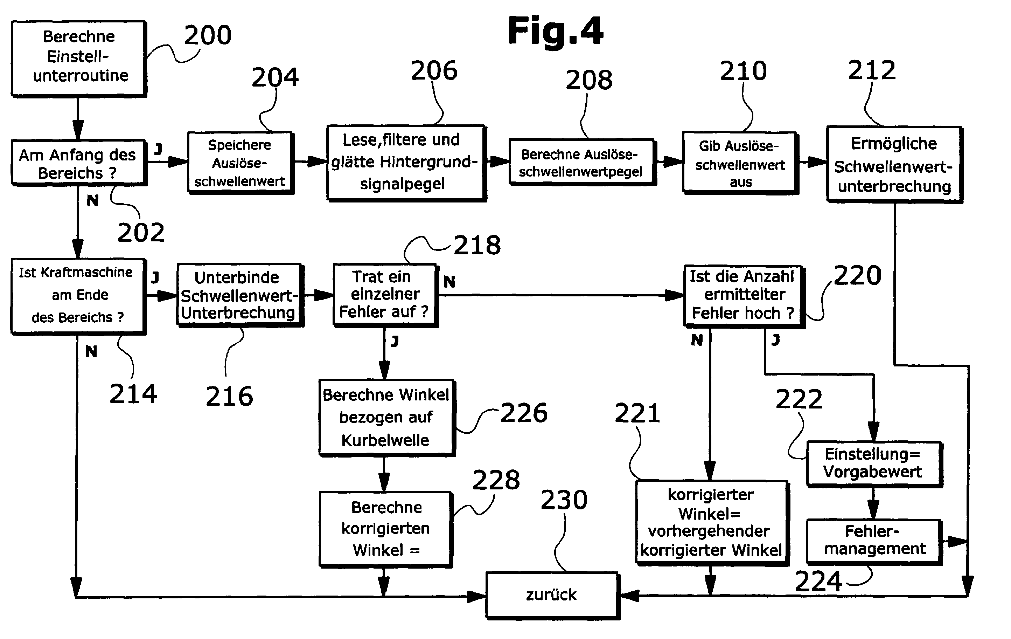

Der Mikroprozessor 22 führt einen Algorithmus aus, der durch die Fig. 4 wiedergegeben wird. Weitere Details bezüglich dieses Algorithmus können dem Computerprogramm entnommen werden, das dieser Anmeldung als Anlage beigefügt ist. Der Einstellungsberechnungsalgorithmus ist als Schritt 200 eingefügt. Schritt 202 leitet den Algorithmus zu Schritt 204, wenn das Signal des Kurbelwellenstellungssensors 32 anzeigt, daß sich die Kraftmaschine 10 am Beginn einer Kraftstoffeinspritzperiode befindet, andernfalls wird der Algorithmus zu Schritt 214 geleitet. Schritt 204 erhält einen Initialdruckgrenzwert oder Auslöse-Schwellenwert von einer gespeicherten, festen Tabelle, die auf der Antriebgeschwindigkeit von dem Antriebsgeschwindigkeitssensor 30 und auf der Krafstoffmenge basiert, welche aus der Integration des Drucksignals des Kraftstoffdrucksensors 34 resultiert. Dieser Kraftstoffmengenwert ist repräsentativ für die Belastung der Kraftmaschine 10. Folglich wird, wenn sich die Antriebsgeschwindigkeit verändert und/oder wenn die Antriebsbelastung variiert, der Initialauslöse-Schwellenwert ebenso variieren.

Wenn das Drucksignal gestört ist, kann Schritt 206 verwendet werden, um das Drucksignal zu filtern und zu glätten. Auf Schritt 206 kann verzichtet werden, wenn das Kraftstoffdrucksignal ausreichend frei von Störungen ist oder es kann alternativ vorgesehen sein, daß diese Funktion durch einen Hardware-Kreis ausgeführt wird.

Schritt 208 errechnet einen neuen Auslöse-Schwellenwert durch ein Addieren eines Vorgabewerts zu dem Wert aus Schritt 204. Der Vorgabewert kann aus dem gefilterten Hintergrundskraftstoffeinspritzdruckpegel aus Schritt 206 abgeleitet werden. Vorzugsweise ist der Schwellenwert relativ zu dem Hintergrundpegel angesetzt, wobei dies eher mittels einer Tabelle als durch ein direktes Errechnen durch den Mikroprozessor 22 durchgeführt wird. Der Hintergrunddruck ist für jede Antriebsgeschwindigkeit und jeden Kraftstoffdurchsatz festgelegt. Der Hintergrunddruckpegel verändert sich bei Veränderungen in Geschwindigkeit und Kraftstoff, der Pegel kann aber basierend auf der Antriebsgeschwindigkeit und dem Kraftstoffdurchsatz vorherbestimmt werden. Daher kann der Anfangspegelausgleichswert in einer gespeicherten Datentabelle des Geschwindigkeit gegen den Kraftstoffdurchsatz aufgezeichnet werden. Die Werte in solch einer Tabelle stellen die Summe des Hintergrundpegels und eines Prozentsatz des Spitzendruckimpulses dar. Die Verwendung einer einzigen Tabelle zur Darstellung zweier physikalischer Werte reduziert die Anforderungen an den Mikroprozessor 22 in Hinsicht auf den Speicher, Geschwindigkeit und Gesamtkosten. Piezoelektrische Drucksensoren weisen üblicherweise eine Ausgabe auf, welche auf Änderungen des Druckes reagiert. Während solch eine Ausgabe ansteigen oder abnehmen wird, wenn sich der Druck ändert, mag der Ausgabepegel nicht dem absoluten Druck entsprechen, und die Ausgabe eines solchen Sensors kann um mehrere Volt abweichen, selbst wenn der Druck konstant bleibt. Wenn sich der Druck ändert, mißt der Sensor die Änderung richtig mit Bezug auf die Sensorausgabespannung vor dem Druckwechsel. Der hier beschriebene Algorithmus ist so ausgeführt, daß er mit solch einem Drucksensor funktioniert.

Schritt 210 gibt den berechneten Auslöse-Schwellenwert an einen Eingang des Steuerkreises 26 ab, so daß der Steuerkreis 26 ein Einspritzeinstellsignal erzeugt, wenn das Signal des Kraftstoffdrucksensors 34 den Auslöse-Schwellenwert übersteigt. Schritt 212 ermöglicht eine Unterbrechung, so daß der Start des Einspritzeinstellsignals durch den Mikroprozessor 22 aufgenommen werden kann, wonach Schritt 230 zu einem Hauptkraftstoffeinspritzalgorithmus (nicht gezeigt) zurückkehrt.

Wenn in Schritt 202 das Signal des Kurbelwellenwinkelsensors 32 anzeigt, daß der Antrieb bzw. die Kraftmaschine 10 sich nicht am Beginn eines Kraftstoffeinspritzzyklus befindet, lenkt Schritt 202 den Algorithmus zu Schritt 214. Schritt 214 leitet den Algorithmus zu Schritt 216, wenn das Signal des Kurbelwellenwinkelsensors 32 anzeigt, daß die Kraftmaschine 10 am Ende eines Kraftstoffeinspritzzyklus ist, ansonsten kehrt der Algorithmus über Schritt 230 zurück. Schritt 216 deaktiviert die Auslöse-Schwellenwert-Unterbrechung. Schritt 218 bestimmt, ob oder ob nicht eine einzelne Unterbrechung auftritt. Wenn mehr als eine einzige Unterbrechung auftritt, bedeutet dies, daß ein Fehler aufgetreten ist, und Schritt 218 lenkt den Algorithmus zu Schritt 220. Wenn die Anzahl der durch Schritt 220 ermittelten Fehler hoch ist, lenkt Schritt 220 den Algorithmus zu Schritt 222, welcher einen Steuerungswert auf einen Vorgabewert, wie beispielsweise 10 Grad von dem oberen Totpunktzentrum bzw. dem oberen Totpunkt setzt, worauf Schritt 222 den Algorithmus zu einem Fehlermanagementschritt 224 lenkt und dann über Schritt 230 zurückkehrt. Wenn die Anzahl der durch Schritt 220 ermittelten Fehler nicht hoch ist, lenkt Schritt 220 den Algorithmus zu Schritt 221, welcher den korrigierten Winkelwert auf den vorhergehenden korrigierten Winkel setzt.

Wenn in Schritt 218 nur eine einzige Unterbrechung auftritt, lenkt Schritt 218 den Algorithmus zu Schritt 226, welcher den Kurbelwellenwinkelwert (bezogen auf das obere Totpunktzentrum bzw. den oberen Totpunkt) bei welchem der Steuerkreis 26 das Steuerungssignal erzeugte, berechnet. Dann erzeugt Schritt 228 einen korrigierten Winkelwert aus einer gespeicherten, festen Tabelle und als eine Funktion der Antriebsgeschwindigkeit des Sensors 30 und der Kraftstoffmenge, abgeleitet aus der Integration des Kraftstoffdrucksignals. Dieser korrigierte Winkelwert, stellt den Kurbelwellenwinkel dar, bei dem ein Kraftstoffeinspritzimpuls beginnt, und dieser Wert kann dazu verwendet werden, die Kraftstoffeinspritzeinstellung in einem geschlossenen Kreis zu regeln.

Ein Teil der Offenbarung dieses Patentdokuments beinhaltet Material, welches einem Anspruch auf Urheberschutz unterworfen ist. Der Urheberschutzeigner hat keine Einwände gegen eine Faximilie-Wiedergabe des Patentdokuments oder der Patentoffenbarung, wie sie in den Unterlagen oder Aufzeichnungen des Amts für gewerblichen Rechtschutz erscheint, behält sich aber trotzdem alle übrigen Rechte vor.

Während die vorliegende Erfindung in Verbindung mit einer speziellen Ausführungsform beschreiben wurde, sollte deutlich sein, daß viele Alternativen, Modifikationen und Variationen für den Fachmann im Lichte der vorstehenden Beschreibung offenkundig sind. Entsprechend ist es beabsichtigt, daß diese Erfindung alle solchen Alternativen, Modifikationen und Variationen, welche in den Geist und den Umfang der folgenden Ansprüche fallen, umfassen soll.

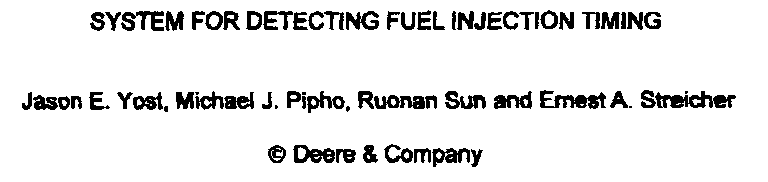

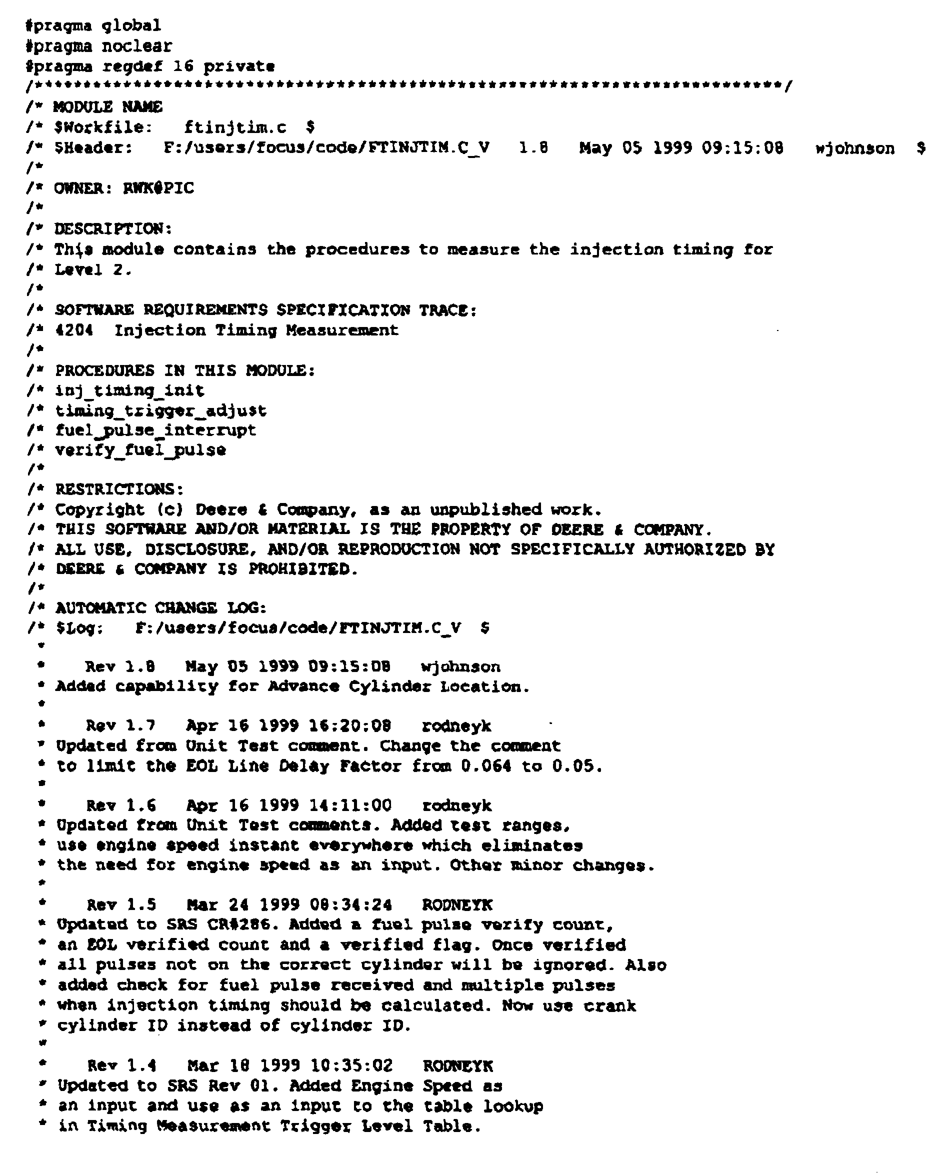

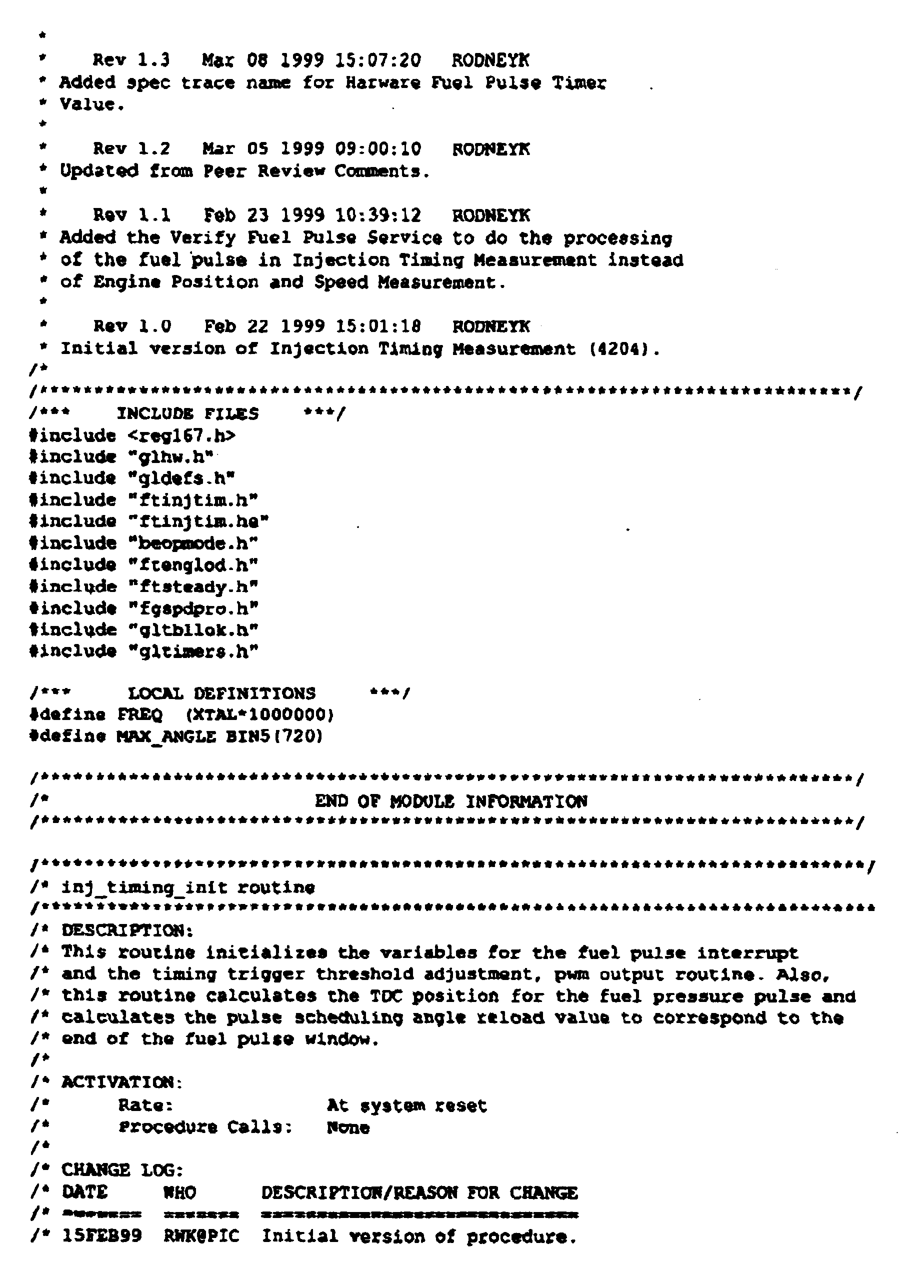

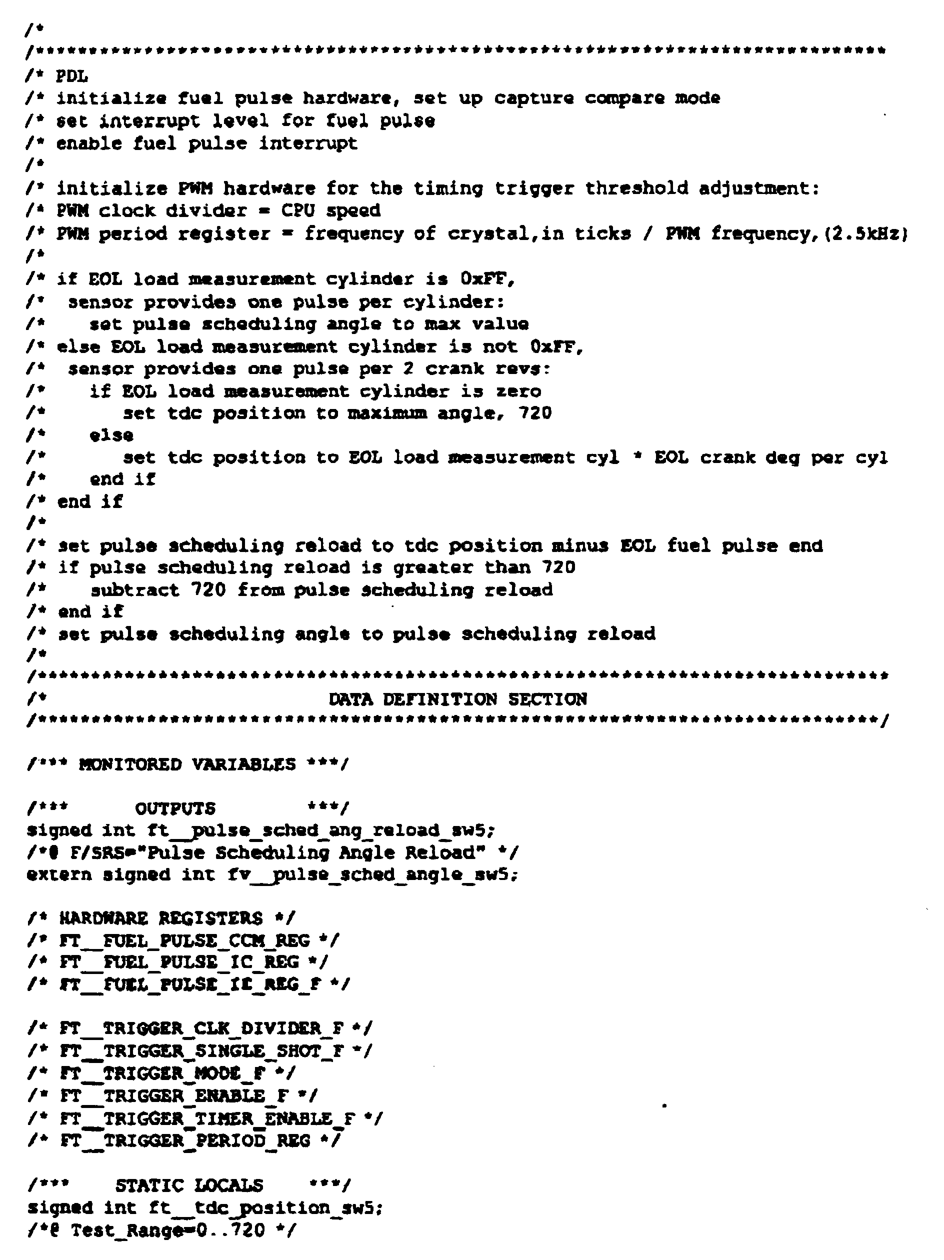

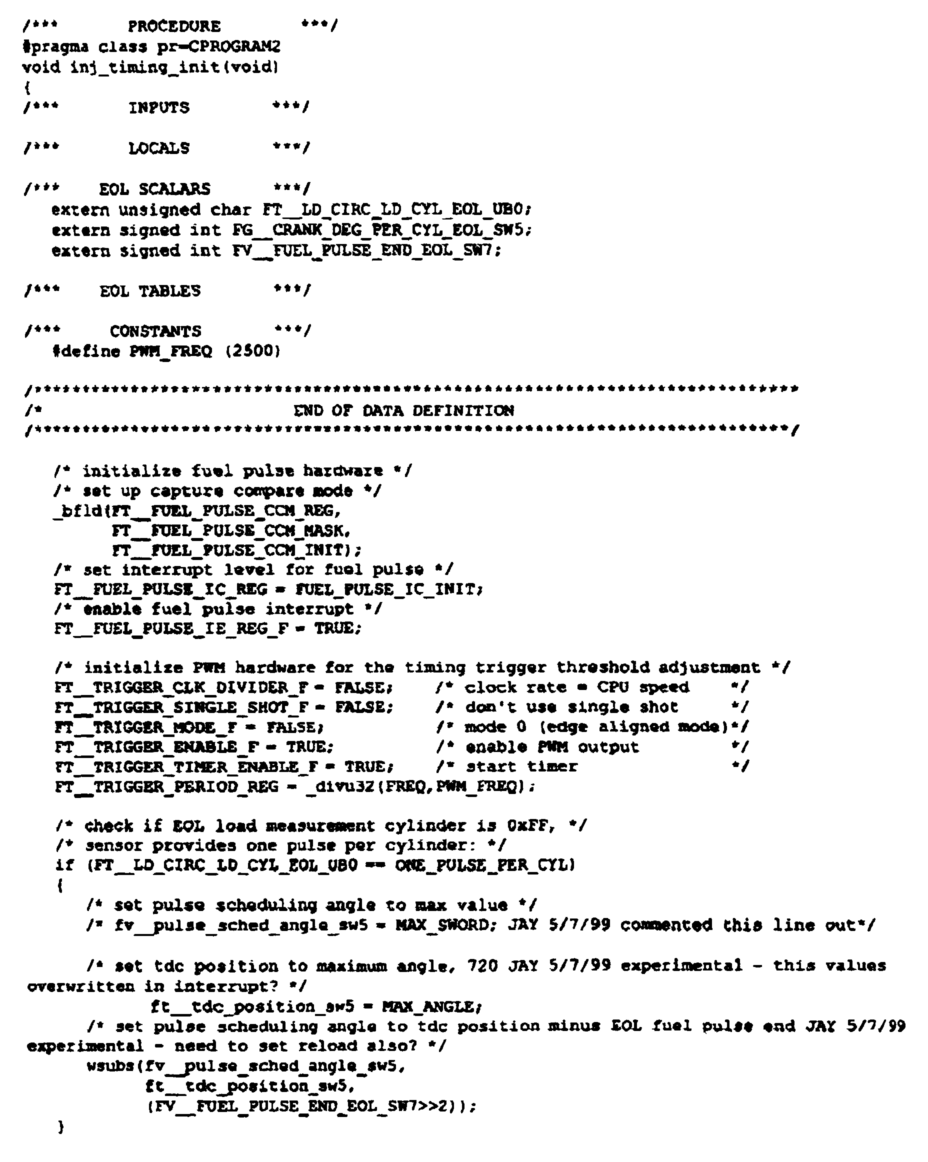

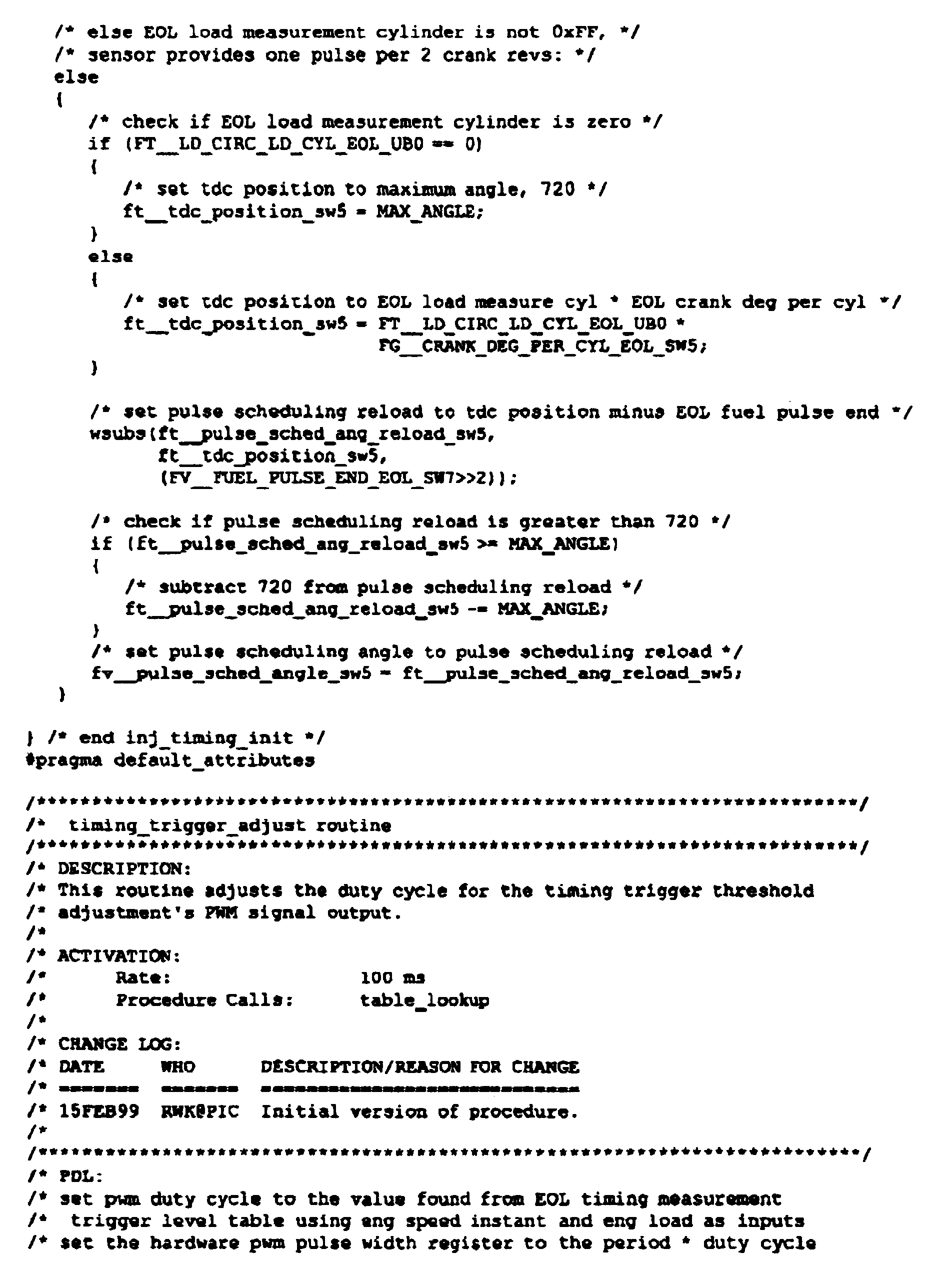

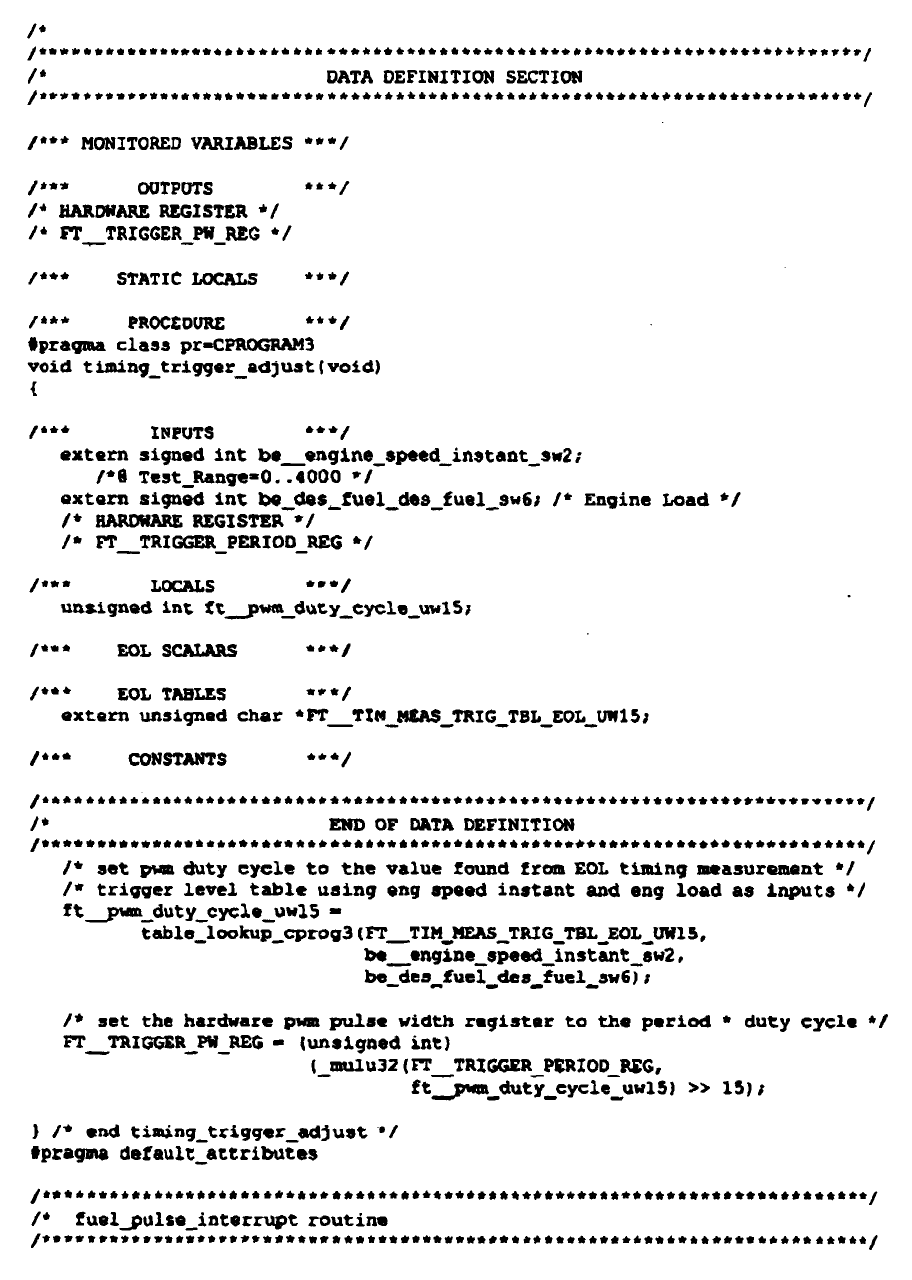

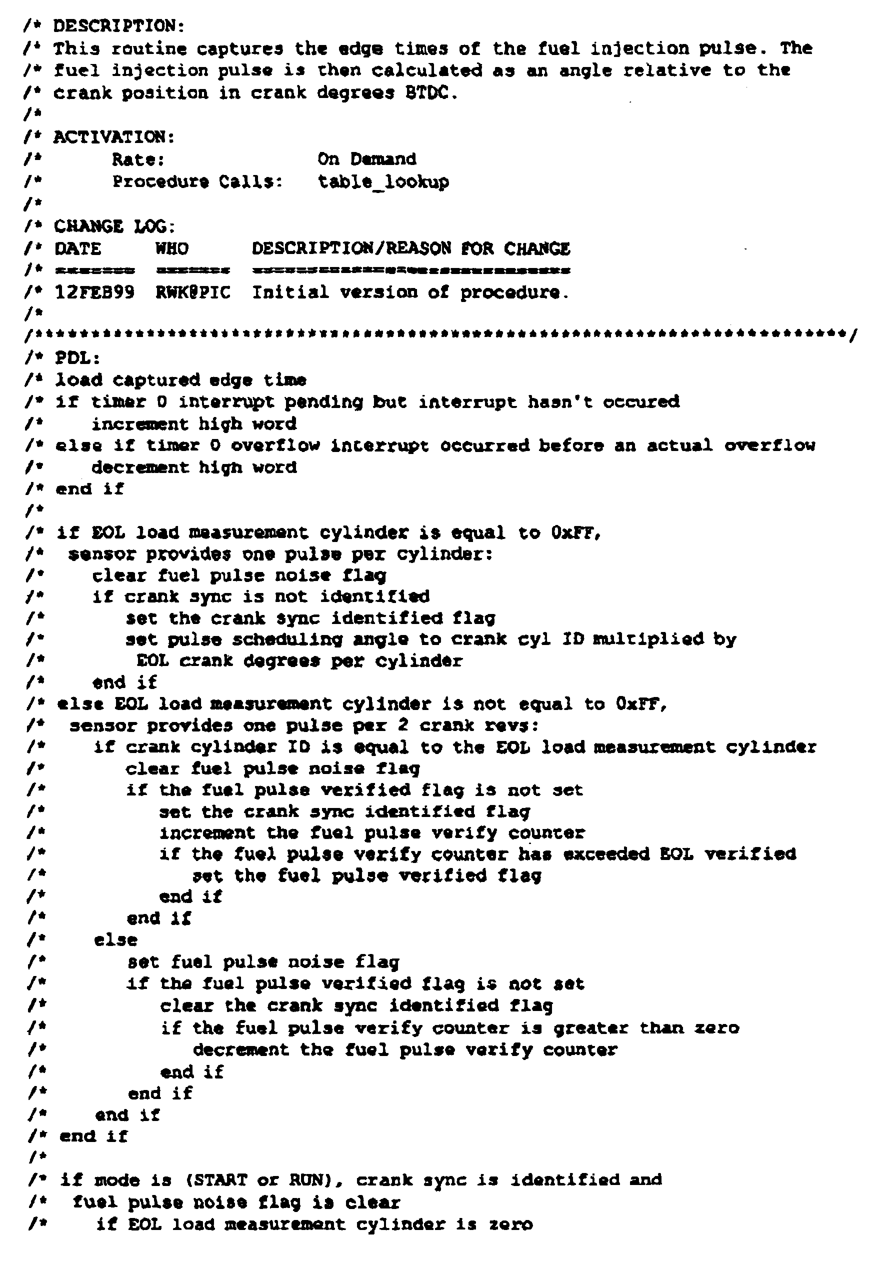

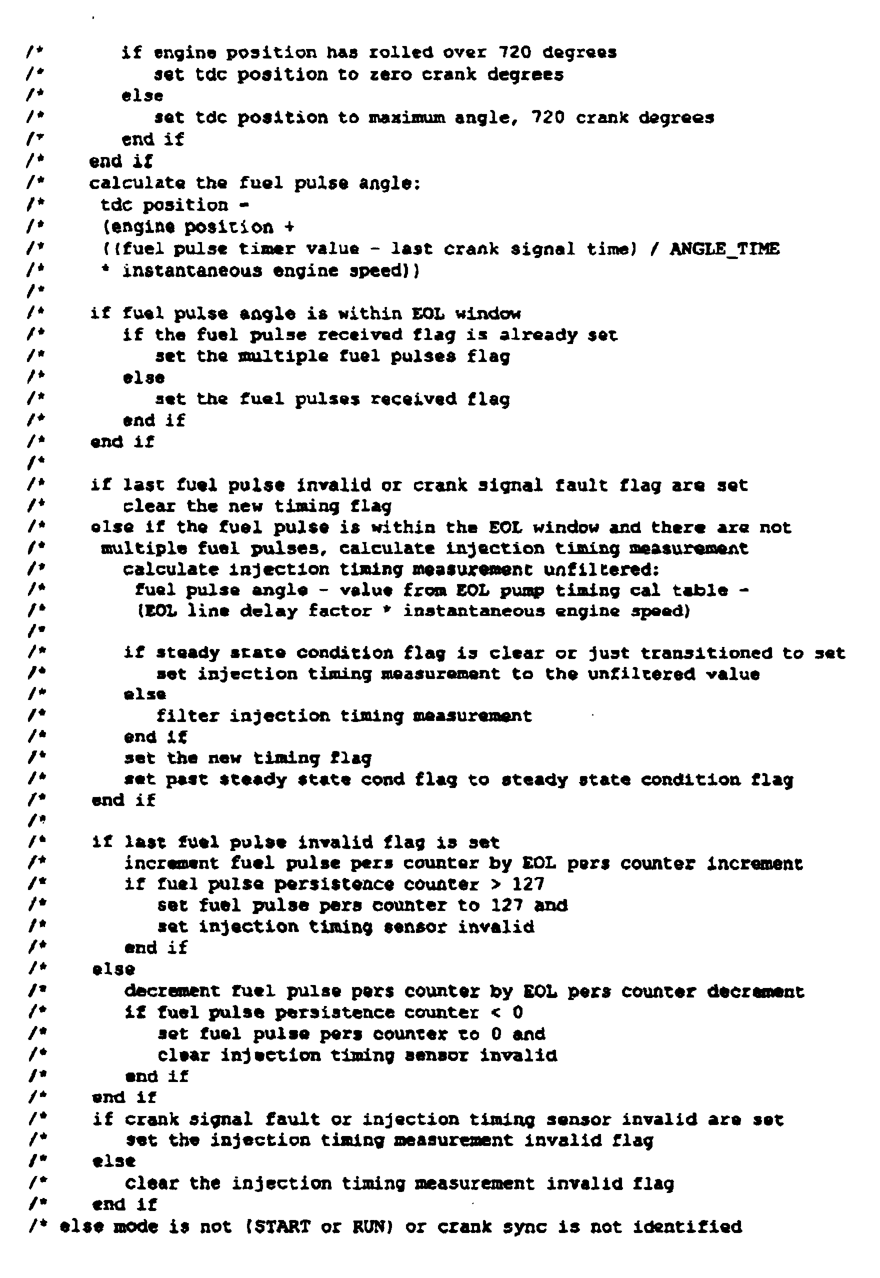

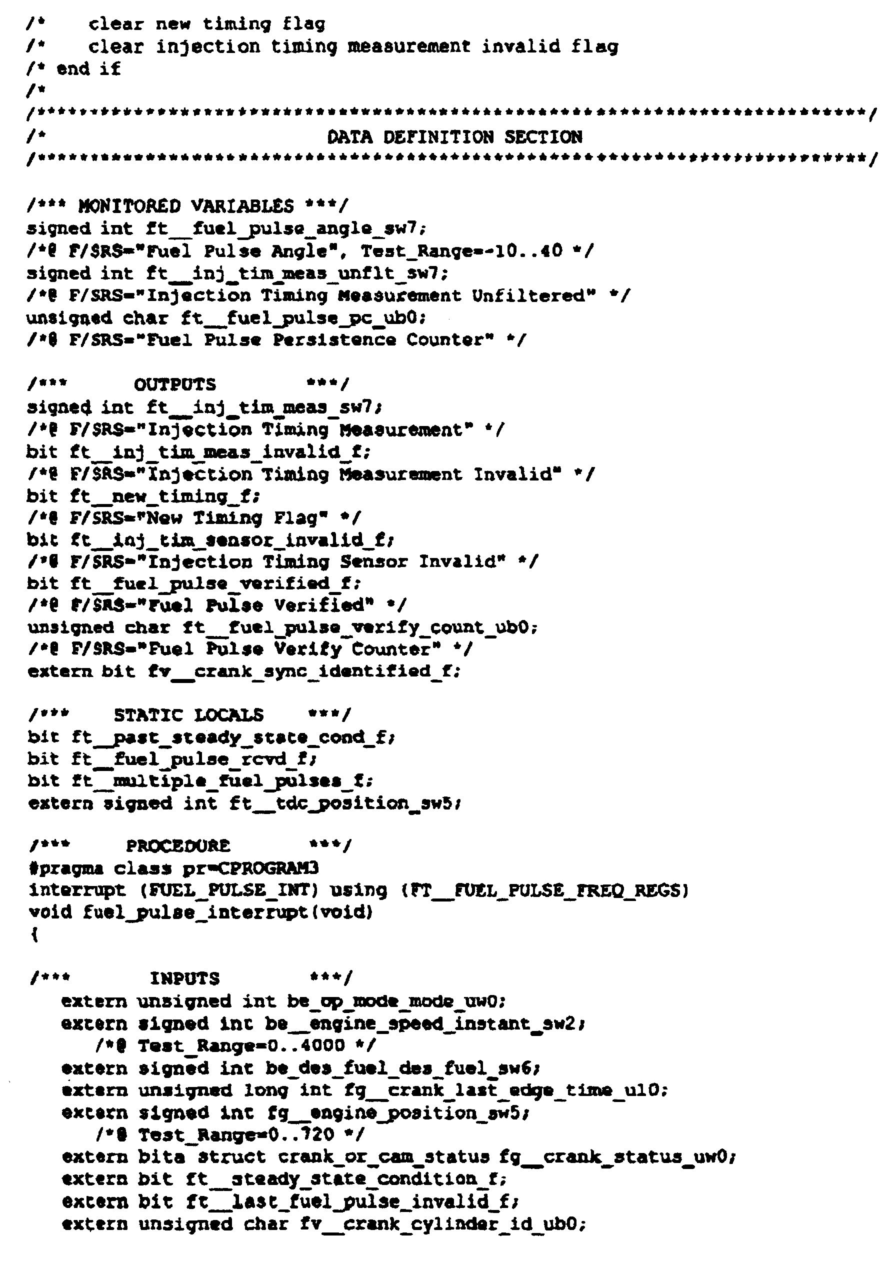

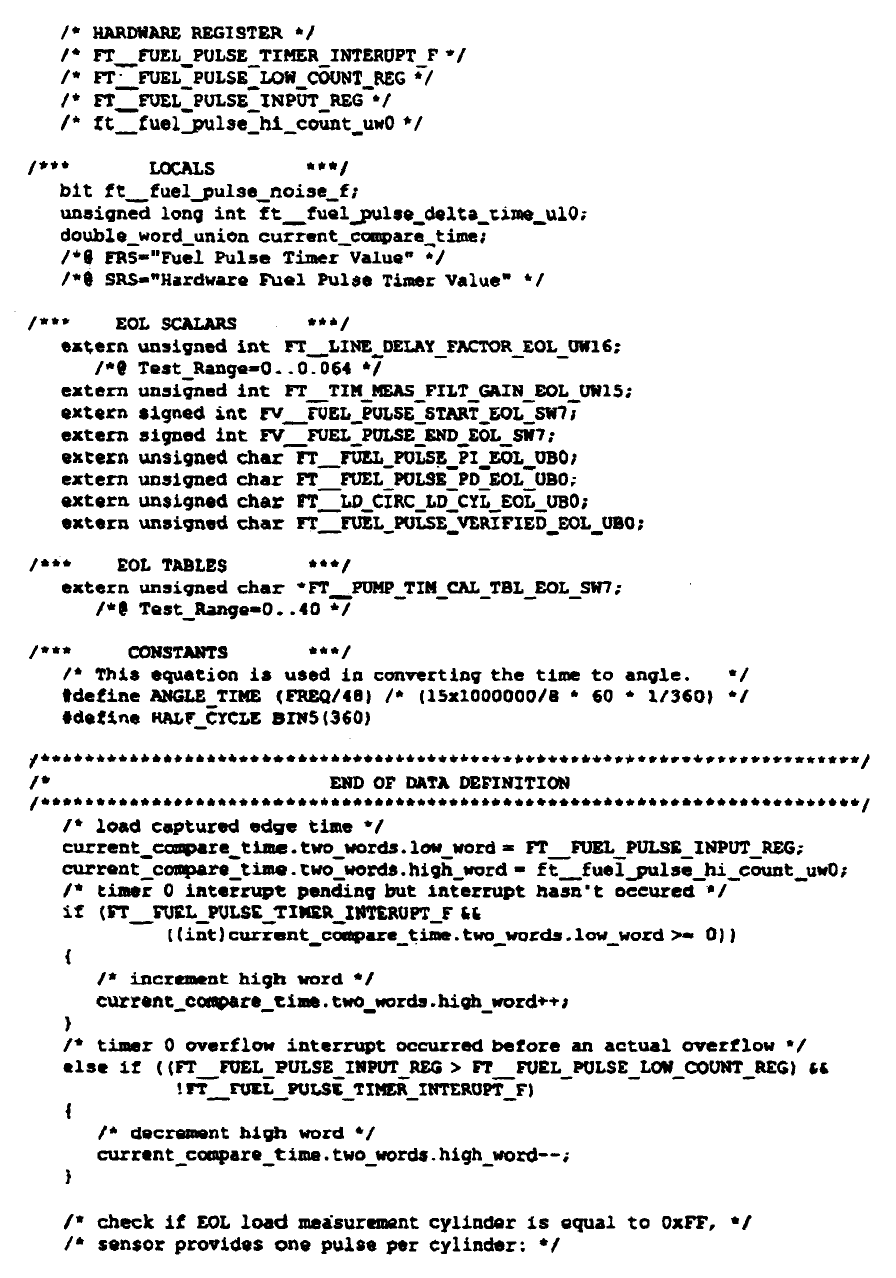

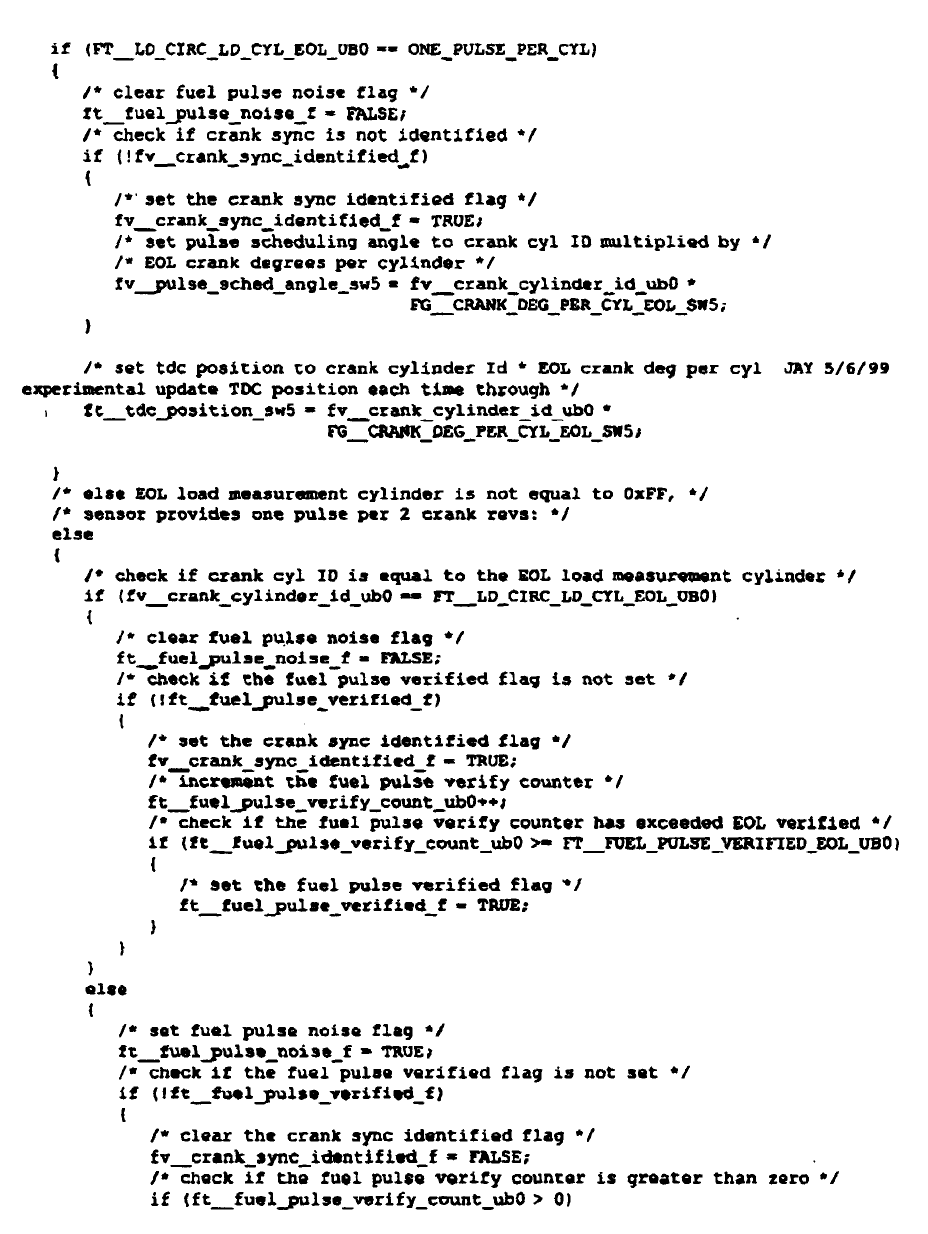

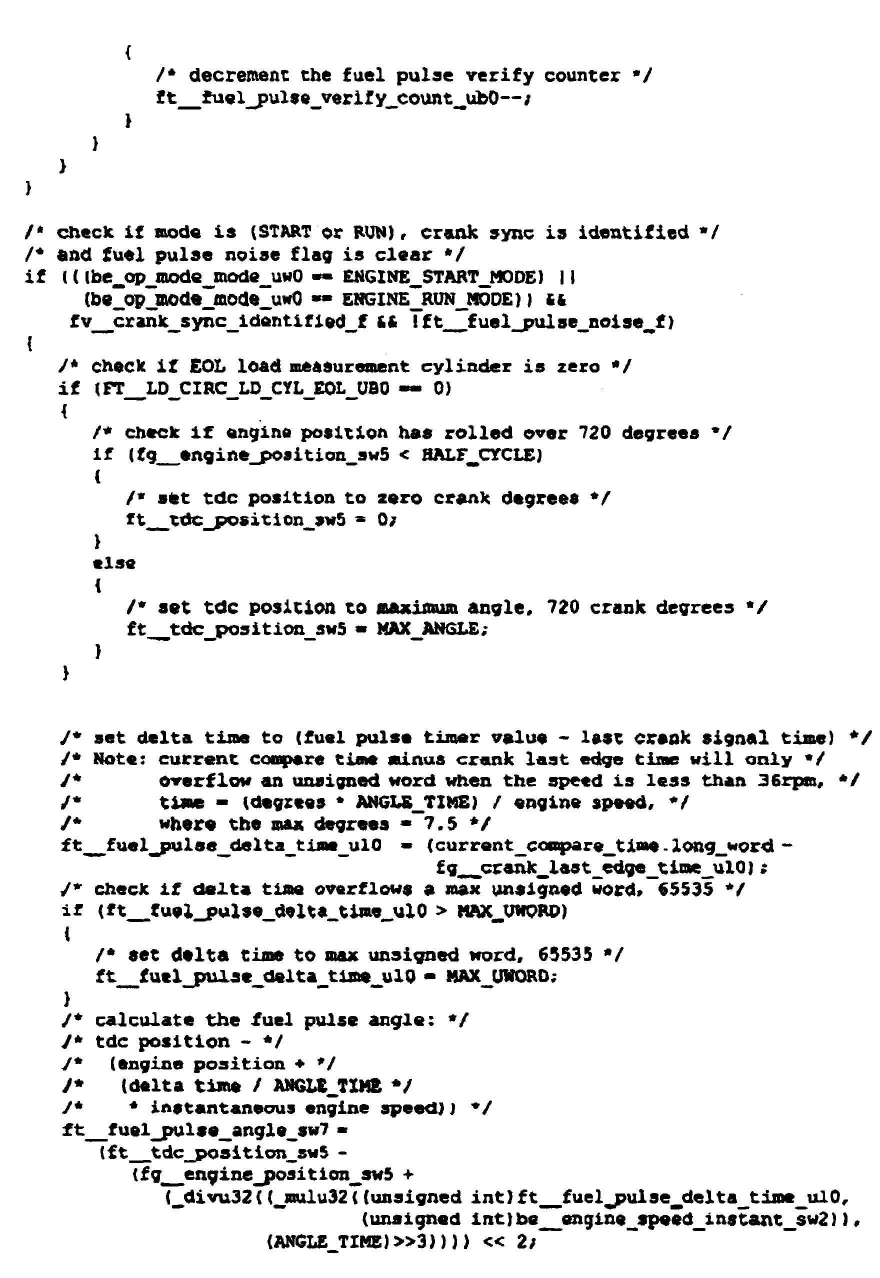

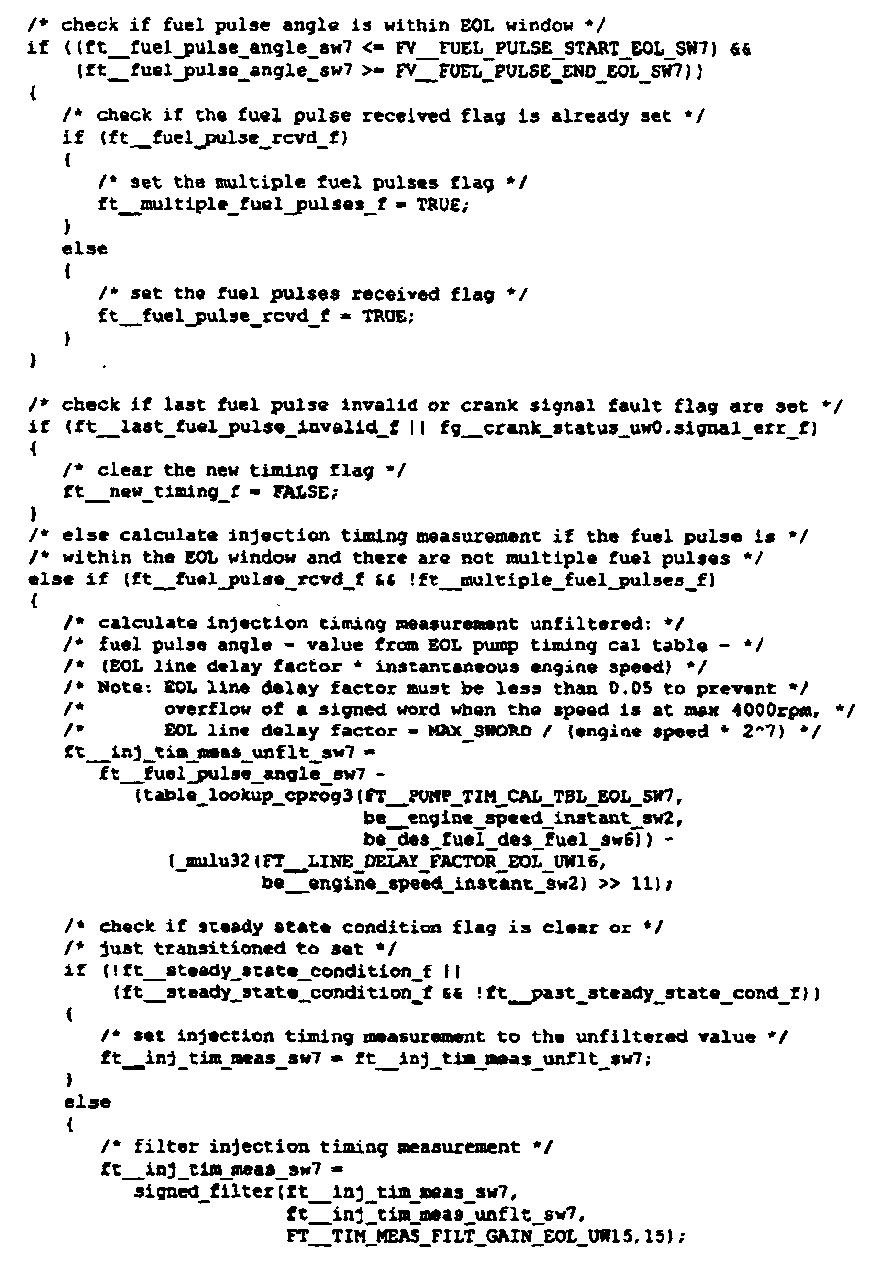

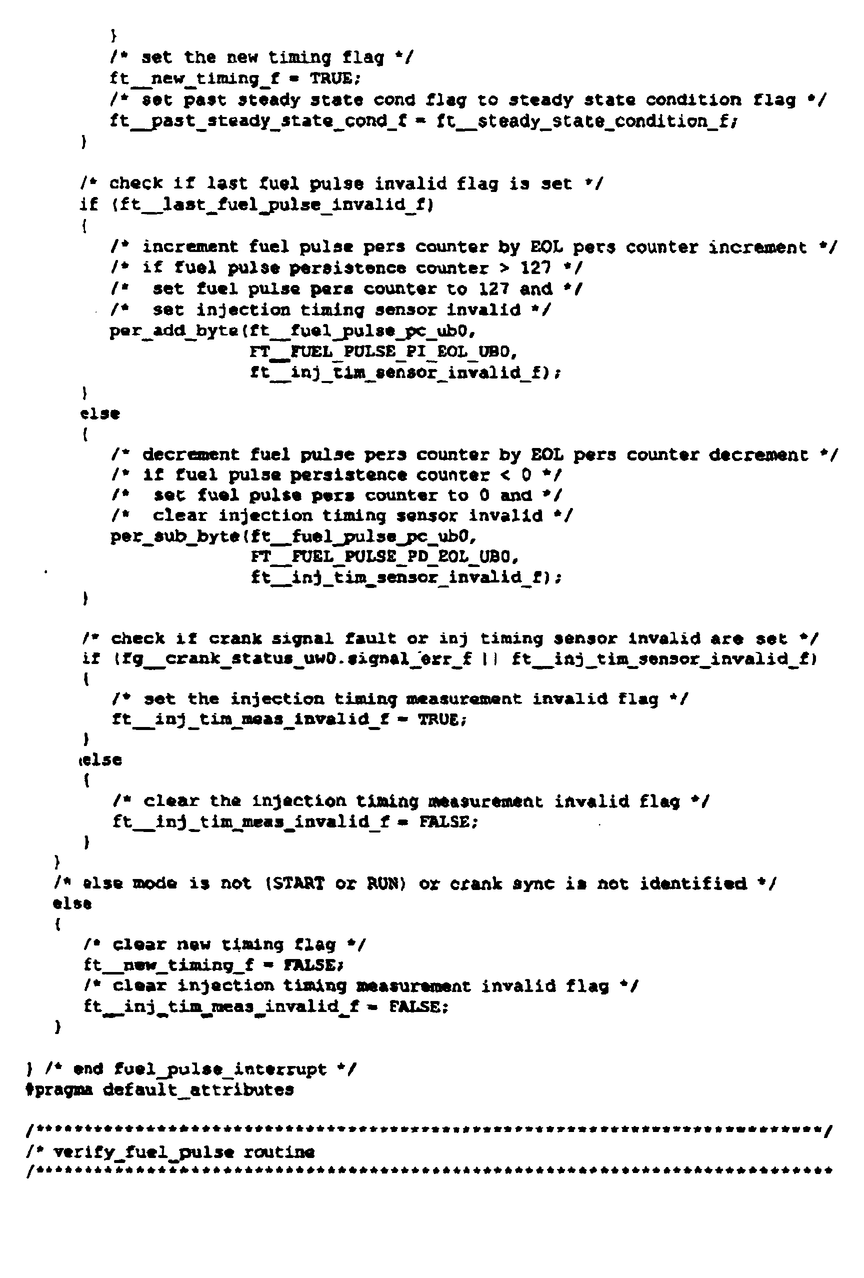

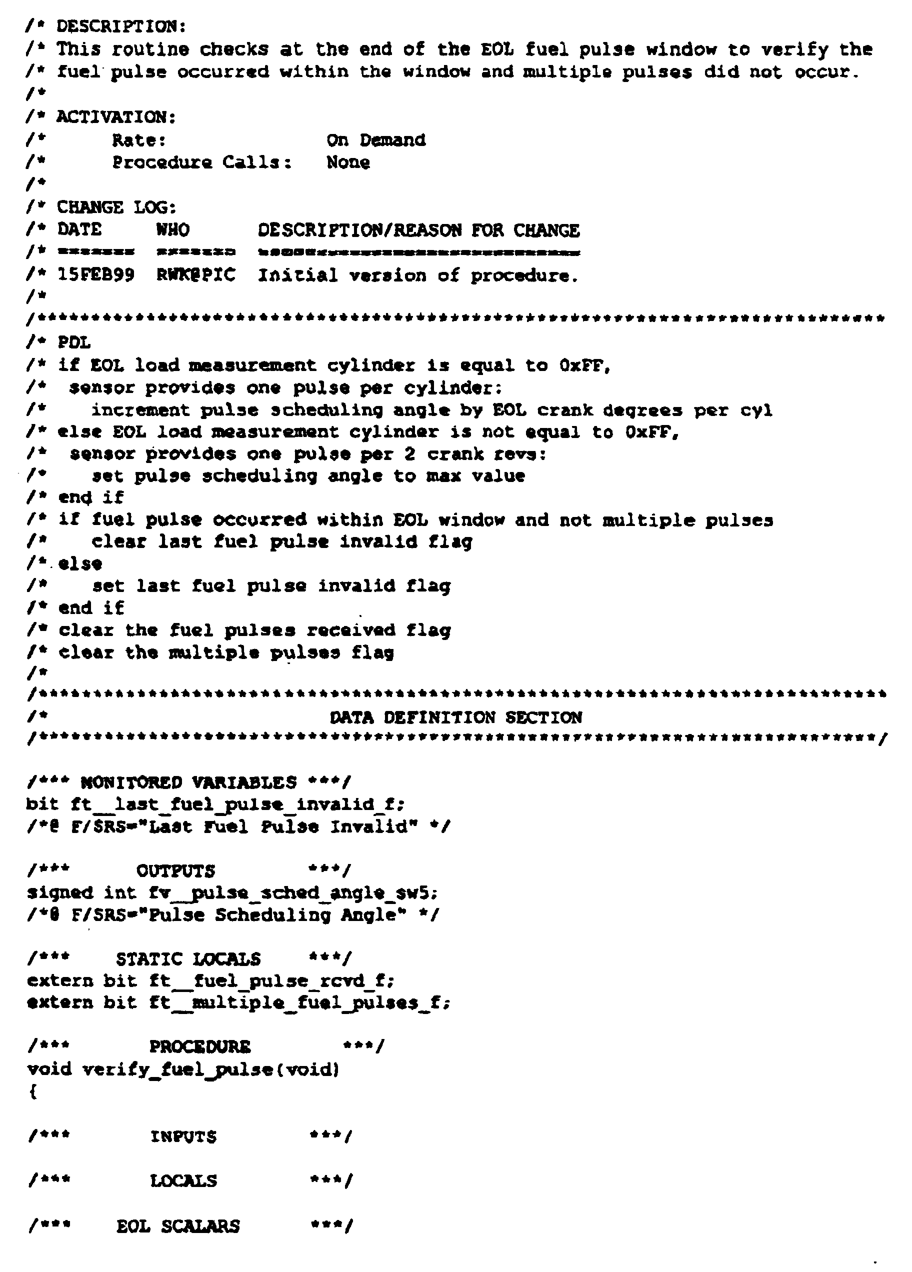

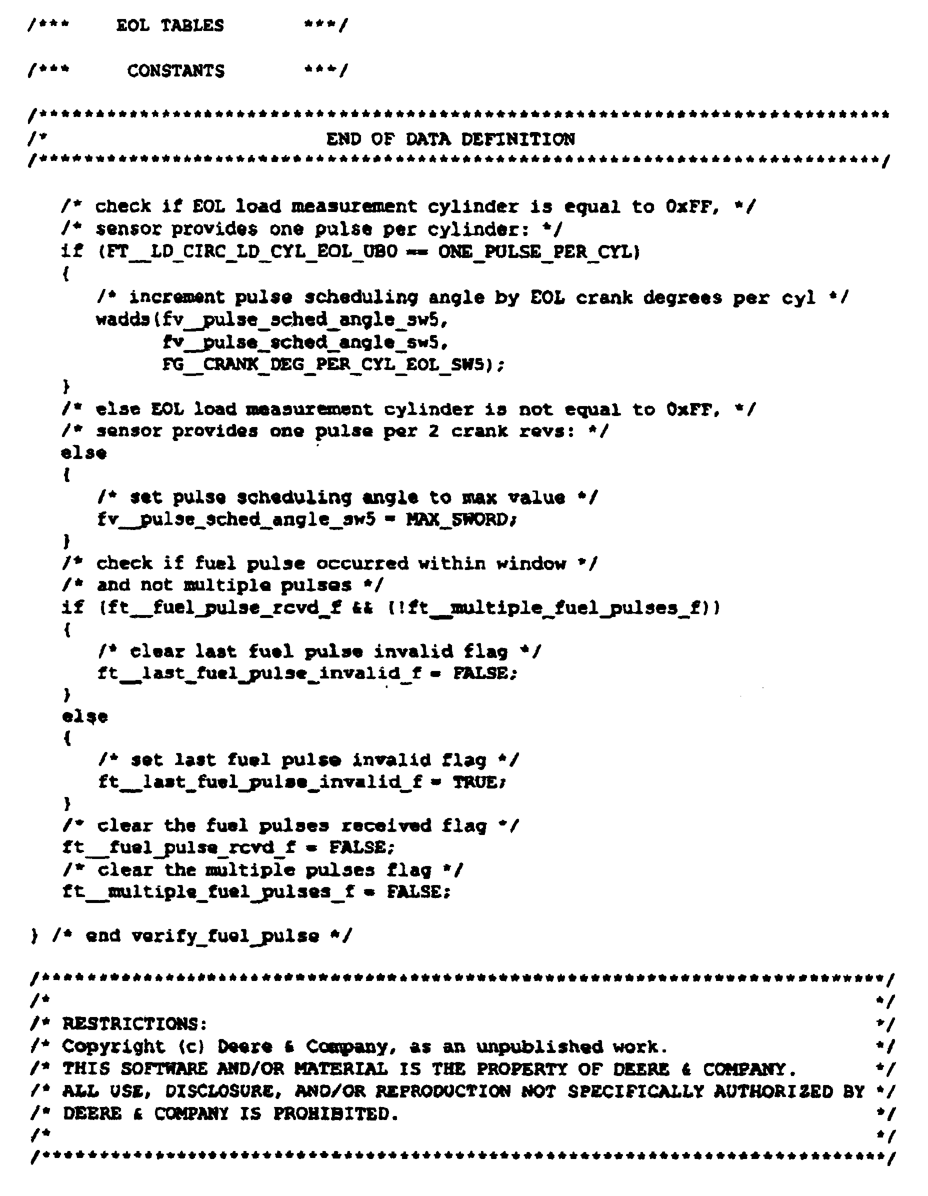

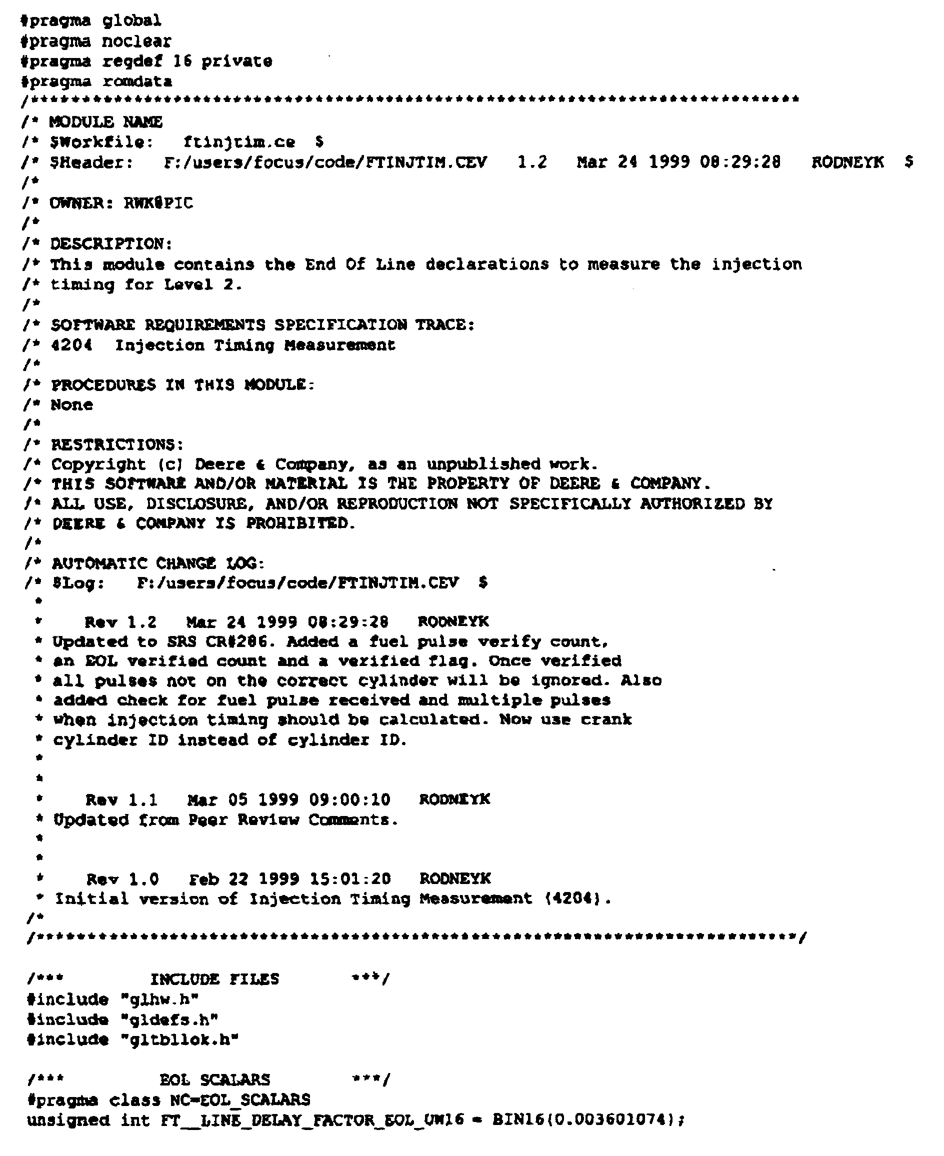

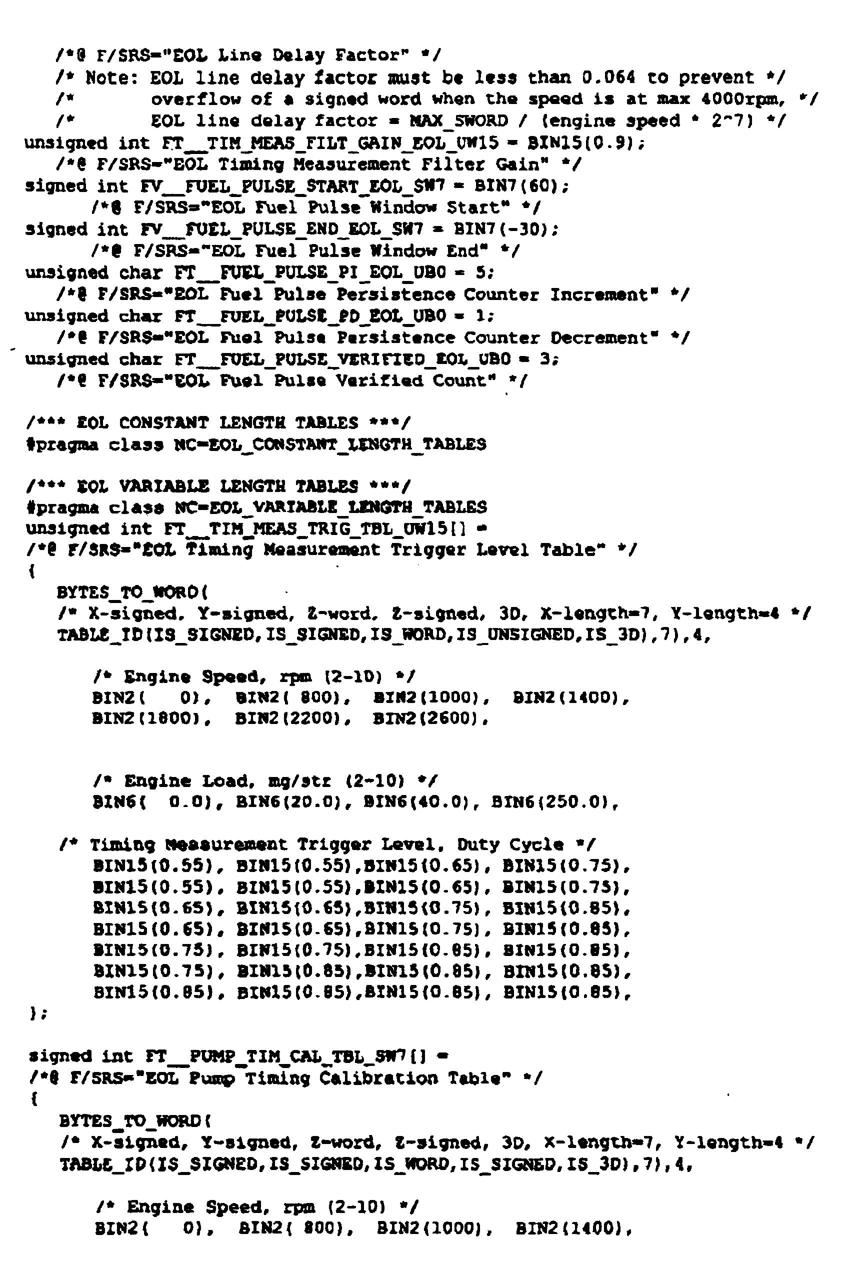

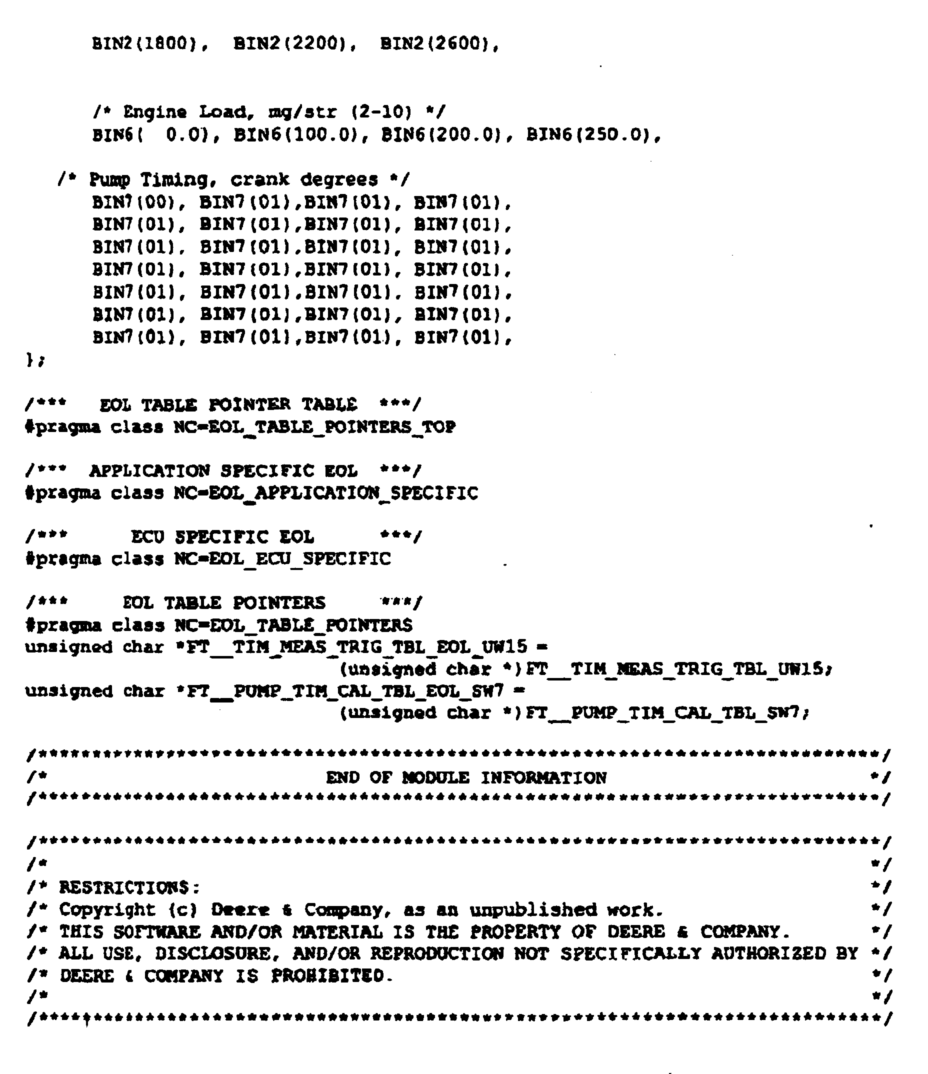

## Patentansprüche

1. Verfahren zur Steuerung des Einspritzvorgangs an einer Kraftmaschine (10), insbesondere an einem Dieselantrieb, mittels eines Steuerungssystems, wobei eine Geschwindigkeit der Kraftmaschine (10) ermittelt und in ein Antriebsgeschwindigkeitssignal umgesetzt wird, und mittels eines Kraftstoffdrucksensors (34) ein Kraftstoffdrucksignal erzeugt wird, dadurch gekennzeichnet, daß die Kraftstoffeinspritzmenge ermittelt und abhängig von dieser ein Belastungssignal und in Abhängigkeit von dem Kraftstoffdrucksignal und dem Belastungssignal ein variables Schwellensignal erzeugt wird, welches mit dem Kraftstoffdrucksignal verglichen wird, und daß ein Steuerungssignal erzeugt wird, wenn das Kraftstoffdrucksignal sich mit dem Schwellensignal überschneidet, während das Kraftstoffdrucksignal an Stärke zunimmt.

2. Verfahren nach Anspruch 1, dadurch gekennzeichnet, daß ein Schwellenwert einer gespeicherten Tabelle entnommen wird, die vorzugsweise im Speicher eines Mikroprozessors (22) abgelegt ist, und daß der variable Schwellenwert in das Schwellensignal umgewandelt wird.

3. Verfahren nach einem oder mehreren der vorherigen Ansprüche, dadurch gekennzeichnet, daß ein neuer Schwellenwert bestimmt wird, indem ein Vorgabewert zu dem variablen Schwellenwert addiert wird, der vorzugsweise der gespeicherten Tabelle entnommen wird.

4. Verfahren nach Anspruch 3, dadurch gekennzeichnet, daß der Vorgabewert von einem gefilterten Kraftstoffdruckpegel abgeleitet wird.

5. Verfahren nach einem oder mehreren der vorherigen Ansprüche, dadurch gekennzeichnet, daß ein eingegrenzter Steuerungsbereich bestimmt wird, und daß, wenn ein einziges Steuerungssignal innerhalb des Steuerungsbereichs erzeugt wird, ein Kurbelwellenwinkelwert bezogen auf den oberen Totpunkt zum Zeitpunkt des Erzeugens des Steuerungssignals berechnet wird.

6. Verfahren nach Anspruch 5, dadurch gekennzeichnet, daß ein korrigierter Kurbelwellenwinkelwert aus einer gespeicherten Tabelle, vorzugsweise als eine Funktion aus der Antriebsgeschwindigkeit und der Kraftstoffmenge, ermittelt wird, wobei der korrigierte Kurbelwellenwinkelwert einen Kurbeiwellenwinkel am Beginn eines Kraftstoffeinspritzimpulses wiedergibt.

7. Verfahren nach einem oder mehreren der vorherigen Ansprüche, dadurch gekennzeichnet, daß ein eingegrenzter Steuerungsbereich bestimmt wird, und daß, wenn mehr als ein Steuerungssignal innerhalb dieses Steuerungsbereichs erzeugt wird, ein Vorgabekurbelwellenwinkelwert bezogen auf den oberen Totpunkt erzeugt wird.

8. Verfahren nach einem oder mehreren der vorherigen Ansprüche, dadurch gekennzeichnet, daß das Steuerungssystem einen Mikroprozessor (22), der das variable Schwellensignal erzeugt, und einen Steuerkreis (26) mit einem Vergleicher (U3) mit einem ersten Eingang zur Aufnahme des Kraftstoffdrucksignals und einen zweiten Eingang zur Aufnahme des variablen Schwellsignals sowie einen Ausgang aufweist, der mit einem Eingang des Mikroprozessors (22) verbindbar ist, um diesem ein Steuerungssignal zu liefern.
